Europäisches Patentamt

European Patent Office

Office européen des brevets

(19)

(11) Numéro de publication : **0 388 330 B1**

(12) **FASCICULE DE BREVET EUROPEEN**

(45) Date de publication du fascicule du brevet :
**12.01.94 Bulletin 94/02**

(51) Int. Cl.$^5$ : **B01D 71/02, // C25D13/02**

(21) Numéro de dépôt : **90420133.2**

(22) Date de dépôt : **12.03.90**

(54) **Procédé de fabrication d'une membrane semi-permeable sur un support conducteur poreux par éléctrophorese.**

(30) Priorité : **14.03.89 FR 8904197**
**06.12.89 FR 8916738**

(43) Date de publication de la demande :
**19.09.90 Bulletin 90/38**

(45) Mention de la délivrance du brevet :
**12.01.94 Bulletin 94/02**

(84) Etats contractants désignés :
**AT BE CH DE DK ES FR GB GR IT LI LU NL SE**

(56) Documents cités :
**FR-A- 2 072 763**
**FR-A- 2 083 439**
**FR-A- 2 107 081**
**FR-A- 2 166 050**
**FR-A- 2 251 351**

(73) Titulaire : **PECHINEY RECHERCHE**
**(Groupement d'Intérêt Economique régi par l'ordonnance du 23 Septembre 1967)**
**23, rue Balzac**
**F-75008 Paris (FR)**

(72) Inventeur : **Alary, Jean-André**
**Le Perrain**
**F-38960 St Etienne De Crossey (FR)**
Inventeur : **Gugliermotte, Francis**
**326, rue I. Stravinski, La Gachettière**
**F-38340 Voreppe (FR)**
Inventeur : **Isnard, Jean-Pierre**
**32, Avenue Jean Perrot**
**F-38100 Grenoble (FR)**

(74) Mandataire : **Vanlaer, Marcel et al**
**PECHINEY 28, rue de Bonnel**
**F-69433 Lyon Cédex 3 (FR)**

## Description

L'invention concerne un procédé de fabrication d'un élément de microfiltration, d'ultrafiltration, d'osmose inverse, constitué d'une membrane minérale semi-perméable sur un support conducteur poreux.

On connaît déjà différents procédés pour fabriquer des éléments destinés à la microfiltration, à l'ultrafiltration ou à l'osmose inverse.

Une première famille de procédés consiste à déposer sur un support poreux une dispersion de particules de taille particulaire adaptée. Ainsi, dans le brevet français n° 2 228 518, on prépare par broyage en milieu aqueux une dispersion d'une poudre d'oxyde métallique telle que la zircone dont on sépare par centrifugation les particules les plus fines pour ne garder que les particules agglomérées. Les particules agglomérées sont remises en suspension aqueuse et mises en circulation dans les tubes poreux servant de support. Les particules sont séparées par filtration et recouvrent l'ouverture des pores du substrat d'une fine couche filtrante.

Dans le brevet européen n° 0 154 295, on prépare une barbotine concentrée bien défloculée d'une poudre de matériau céramique et on y trempe chacune des extrémités d'un bloc macroporeux percé de canaux longitudinaux de manière à remplir au moins partiellement la porosité dudit bloc macroporeux, tout en agitant la barbotine aux ultra-sons, puis on fritte l'ensemble. On dépose ensuite une membrane à la surface des canaux, par engobage, en introduisant la barbotine dans les canaux, en vidant les canaux, en séchant la couche ainsi déposée et enfin en la frittant à 1600°C.

Une deuxième famille de procédés consiste à déposer sur un support poreux un gel peptisé à base d'hydroxyde métallique.

Dans le brevet français n° 2 555 067, on fait un mélange de composé organométallique, tel qu'un alcoxyde métallique avec un agent épaississant en milieu solvant organique anhydre; on dépose par engobage une couche mince du mélange sur un support poreux, on sèche la couche déposée en atmosphère suffisamment humide pour permettre l'hydrolyse de l'alcoxyde métallique ; on élimine l'agent épaississant par un traitement thermique puis on fritte les particules entre 800° et 1000°C. Dans une variante du procédé, on dépose par engobage sur le support poreux un mélange contenant outre un agent épaississant, un acide minéral et l'hydroxyde métallique, produit d'hydrolyse de l'alcoolate métallique. Dans les deux variantes, on utilise la technique d'engobage ; elle consiste à remplir de mélange un tube poreux, de pores plus gros que ceux désirés pour l'élément d'ultrafiltration, à laisser séjourner quelques minutes puis à vider le tube ; une partie du mélange reste déposée sur la surface interne du tube ; elle est ensuite séchée puis soumise à un traitement thermique.

Dans le brevet français n° 2 550 953, on dépose par engobage sur un substrat poreux perméable une couche mince d'un gel d'hydroxyde peptisé que l'on sèche et traite thermiquement entre 500 et 1100°C.

Selon un mode avantageux du procédé, on peut réaliser ensuite le dépôt d'une deuxième couche de gel peptisé, ce qui permet de remplir les manques éventuels dûs à un défaut de mouillage lors de la première opération de dépôt ; ceci permet également de remplir d'éventuelles fissures qui se seraient formées lors du traitement thermique du premier dépôt.

Dans le brevet français FR-A1-2 251 351, on connaît la formation de revêtements sur des supports conducteurs à l'aide d'un champ électrique à partir de suspensions de poudre de céramique dans de l'eau et on décrit un procédé pour rendre conducteur un support céramique macroporeux et pour déposer à sa surface par électrophorèse une poudre non conductrice grâce à son potentiel électrocinétique.

Tous ces procédes comportent une phase de dépôt soit de particules minérales solides, généralement sous forme de barbotine, soit de gels peptisés d'hydroxydes métalliques. La technique de dépôt la plus courante est l'engobage, celle-ci décrite dans le FR-A1-2 251 351 étant beaucoup plus difficile à mettre en oeuvre industriellement.

Les inconvénients de la technique d'engobage sont bien connus :
- la technique d'engobage ne s'applique facilement que pour l'intérieur des corps creux, que l'on peut remplir et vider, typiquement des tubes poreux ;
- la stabilité rhéologique au cours du temps des compositions adaptées à l'engobage, en particulier celles de barbotines, est mauvaise, de sorte qu'il est difficile d'assurer un dépôt de qualité constante ;
- la technique d'engobage repose sur un ensemble de phénomènes complexes où interviennent outre les propriétés rhéologiques propres des compositions à déposer, les phénomènes de mouillage et de tension superficielle, de capillarité, de gravité, sans compter d'éventuels effets hydrodynamiques liés au remplissage et à la vidange du récipient poreux, de sorte que l'on ne peut être sûr d'avoir localement des couches filtrantes ayant les mêmes caractéristiques ;
- après vidange du récipient poreux, le support poreux engobé ne peut être manipulé qu'avec précaution et en évitant tout contact avec la surface engobée ;
- le dépôt sur le support poreux a une teneur en matière minérale filtrante qui est sensiblement celle de la barbotine ou de gel de départ. Il en résulte une phase de séchage longue et conduisant généralement

EP 0 388 330 B1

à un faïencage et même à une fissuration ou un effritement de la membrane sèche de sorte que plusieurs opérations successives d'engobage peuvent être nécessaires pour obtenir une membrane exempte de fissuration ;

- enfin, les couches filtrantes déposées sur un support poreux par engobage peuvent présenter un accrochage insuffisant et se désolidariser du support poreux, notamment durant le décolmatage du filtre.

La demanderesse a cherché et trouvé un procédé qui supprime tous ces inconvénients.

Le procédé selon l'invention comporte les étapes suivantes :

a) on prépare un bain d'électrophorèse (1) en dispersant finement un ou plusieurs produits solides minéraux inertes dans un milieu liquide tel que l'eau, l'eau en mélange avec des solvants organiques au moins partiellement hydrosolubles, en présence d'une résine d'enrobage hydrosoluble électrodéposable,

b) après avoir mis ledit bain d'électrophorèse (1) en contact avec tout ou partie du support conducteur poreux (2) de géométrie quelconque, pris comme électrode et avec une contre-électrode métallique (3), on dépose par électrophorèse, sur toute la surface du support conducteur poreux en contact avec le bain d'électrophorèse, au moins une couche (10) de produits solides minéraux, finement divisés, enrobés de résine électrodéposable ;

c) on traite thermiquement le support conducteur poreux, revêtu d'une ou plusieurs couches de produits minéraux finement divisés de façon à éliminer l'eau, les solvants organiques restants, les matières organiques, puis à fritter la couche de produits solides minéraux finement divisés jusqu'à obtention de la finesse de pores souhaitée.

La première étape du procédé selon l'invention concerne la préparation d'une dispersion fine de produits solides minéraux finement divisés en présence d'une résine d'enrobage électrodéposable.

Ces produits solides minéraux finement divisés peuvent être des poudres finement divisées appartenant à la famille des oxydes : $ZrO_2$, $TiO_2$, $Al_2O_3$, $SiO_2$, $Y_2O_3$, $3Al_2O_3$-$2SiO_2$ (mullite), la cordiérite ($2Al_2O_3$-$2MgO$-$5SiO_2$), $Al_2TiO_5$ (titanate d'Aluminium), $Al_2MgO_4$ (spinelle de magnésie), $ZrSiO_4$ (zircon), applicables à la microfiltration, l'ultrafiltration, l'osmose inverse, la perméation gazeuse, $RuO_2$ applicable à l'électro-ultrafiltration et à la perméation gazeuse.

Ces poudres peuvent appartenir à d'autres familles chimiques, ainsi le SiC, $Si_3N_4$, SiALON applicables plus précisément en microfiltration et en ultrafiltration.

La surface spécifique des poudres finement divisées peut aller de quelques $m^2/g$ à plusieurs centaines de $m^2/g$.

Les produits solides minéraux finement divisés peuvent être également des gels peptisés à base d'hydroxyde de Al, Ti, Zr, Si, Y, ou de mélanges de ces hydroxydes, notamment l'hydroxyde d'aluminium avec d'autres métaux pouvant conduire à la formation de spinelles et de manière plus générale, à base des précurseurs des oxydes, sous forme de poudre, cités précédemment. Selon l'invention, il est possible d'utiliser des mélanges de produits solides minéraux différents par leur nature chimique ou cristallographique ou leur taille particulaire, soit en dispersant simultanément les produits solides minéraux, soit en mélangeant sous agitation une dispersion fine de l'un et une dispersion fine de l'autre.

Les produits solides minéraux finement divisés sont choisis en fonction d'exigences rencontrées lors de la mise en service de la membrane filtrante, telles que l'inertie chimique et la tenue à la corrosion, l'inocuité dans le cas d'un contact avec des produits alimentaires et bien sûr aussi en fonction d'exigences de fabrication de la membrane poreuse telles que une faible solubilité dans l'eau et une stabilité thermique du produit solide de départ.

Les produits solides minéraux finement divisés sont dispersés selon l'invention dans un milieu liquide tel que l'eau, l'eau en mélange avec des solvants organiques au moins partiellement hydrosolubles en présence d'une résine électrodéposable.

Plus précisément, le milieu liquide est constitué de 30 à 100 % en poids d'eau et de 0 à 70 % en poids d'un ou plusieurs solvants organiques au moins partiellement hydrosolubles, généralement des solvants organiques hydroxylés tels que alkyls-glycols, par exemple l'éhtyl-glycol, le butyl-glycol.

Les techniques de dispersion de produits solides dans un milieu liquide utilisables selon l'invention sont connues, et utilisent par exemple des broyeurs à barres, à billes, à boulets, à sable, des malaxeurs à double vis, des disperseurs rapides à sable ou à billes, des disperseurs ultra rapides à rotor et stator, des disperseurs à ultrasons ou à vibrations mécaniques.

Durant la phase de dispersion, il se produit simultanément une désagglomération du produit solide minéral de départ, qui peut être éventuellement sous forme de particules fines mais agglomérées, et un enrobage du produit solide minéral désaggloméré par une résine hydrosoluble électrodéposable de façon à avoir une dispersion fine qui soit stable au cours du temps, entièrement électrodéposable et de granulométrie moyenne comprise entre 1nm et 10 $\mu$m.

Selon l'invention, on peut utiliser des résines hydrosolubles déposables à la cathode (bain de cataphorèse) ou déposables à l'anode (bain d'anaphorèse). On choisira de préférence une résine déposable à la cathode car c'est dans cette famille qu'il y a actuellement le plus grand choix de résines et que l'on trouve les résines de meilleur rendement électrique.

De telles résines sont commercialisées par exemple sous la marque déposée RESIDROL ® (Résidrol SWE 5219 et SWE 5186) commercialisée par HOECHST.

Enfin, la formulation peut contenir des additifs destinés à faciliter la phase de dispersion tels des agents anti-mousse.

L'étape de dispersion est contrôlée par analyse granulométrique et poursuivie jusqu'à obtention de la finesse souhaitée. On sépare, le cas échéant, la fine dispersion des éléments de broyage (billes, boulets, sable...).

Selon l'invention, on ajuste éventuellement la composition de la fine dispersion par ajout, sous agitation, de solution à base d'eau, de solvant hydro-organique et de résine électrodéposable, de façon à avoir un bain d'électrophorèse satisfaisant aux conditions suivantes :

si on désigne par M le pourcentage pondéral de matière minérale et par 0 le pourcentage pondéral de matière organique (sur la base de l'extrait sec de la résine électrodéposable), le bain d'électrophorèse doit avoir les caractéristiques suivantes :

a) M + O compris entre 5 % et 45 % et préférentiellement compris entre 15 et 30 %

b) rapport M/O compris entre 0,1 et 25 et préférentiellement compris entre 0,5 et 10

c) la résistivité $\rho$ comprise entre 100 et 5000 $\Omega$.cm et préférentiellement entre 500 et 2000 $\Omega$.cm.

On obtient ainsi des dispersions de fines particules stables au cours du temps.

Selon l'invention, on place dans le bain d'électrophorèse un support poreux conducteur, de géométrie quelconque, dont une partie peut être soustraite au contact du bain par tout moyen approprié, par exemple par application de film plastique, par dépôt de peinture ou de vernis sur la surface à soustraire, et dont l'autre partie est destinée à être revêtue d'une membrane filtrante; typiquement, le support conducteur poreux peut avoir des pores allant de 0,1 à 50 $\mu$m et être à base de métal ou d'alliage métallique ou de céramique conductrice ou à base de matériaux carbonés, y compris les composites carbone-carbone, de préférence graphités. Le support conducteur poreux peut être rigide et de forme quelconque, les formes "tubes" et "plaques" étant les plus courantes, mais il peut être aussi pour certaines applications semi-rigide ou même souple, par exemple du type treillis, nappe ou tissu conducteur avec des fibres conductrices métalliques, ou en graphite ou tout autre matériau conducteur adapté. Après avoir placé dans le bain d'électrophorèse une contre-électrode métallique, que l'on relie, de même que le support conducteur poreux, à un générateur de courant continu, dont on fixe la polarité selon que la résine doit être déposée à la cathode ou à l'anode, on électrodépose une couche de produit(s) solide(s) minéral(aux) enrobée de résine qui s'électro-coagule.

La demanderesse a observé que, lorsque le support conducteur poreux était un tube de grande longueur par rapport au diamètre, c'est-à-dire typiquement une longueur supérieure à 4 fois le diamètre intérieur du tube, on ne pouvait pas obtenir un dépôt d'épaisseur régulière sur la surface intérieure du tube. Dans ce cas, l'invention est mise en oeuvre à l'aide d'une contre-électrode conductrice (3) centrée à l'intérieur du tube (2), la composition du bain d'électrophorèse (1) pouvant être maintenue constante à l'intérieur du tube par tout moyen approprié, typiquement en assurant une circulation du bain.

Les modalités pratiques de mise en oeuvre de l'invention dans le cas où le support poreux est un tube de grande longueur par rapport au diamètre sont nombreuses et varient en particulier selon le type de contre-électrode et selon qu'il y a ou pas un déplacement relatif de la contre-électrode (3) et du tube (2).

Selon une première modalité de l'invention, la contre-électrode est un fil conducteur (3) ayant sensiblement la longueur du tube (2).

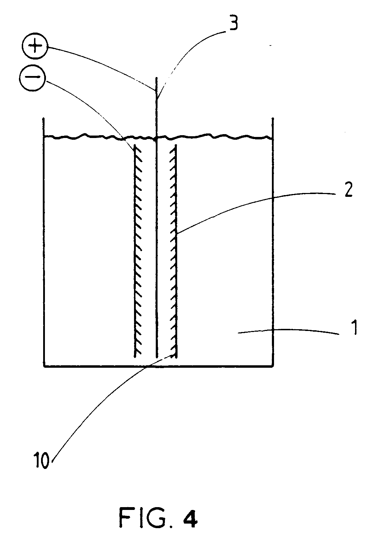

On peut mettre en oeuvre l'invention de manière totalement statique, selon la figure 4, mais il est préférable que le bain soit maintenu sous agitation pour éviter tout risque de sédimentation.

Afin qu'il n'y ait pas de dépôt de bain (1) sur la surface externe du tube, on peut recouvrir la surface externe du tube poreux d'un produit insoluble à peu soluble dans le bain d'électrophorèse tel qu'un film plastique éventuellement thermorétractable, un vernis, une cire, tous moyens qui seront éliminés après le dépôt de la membrane semi-perméable.

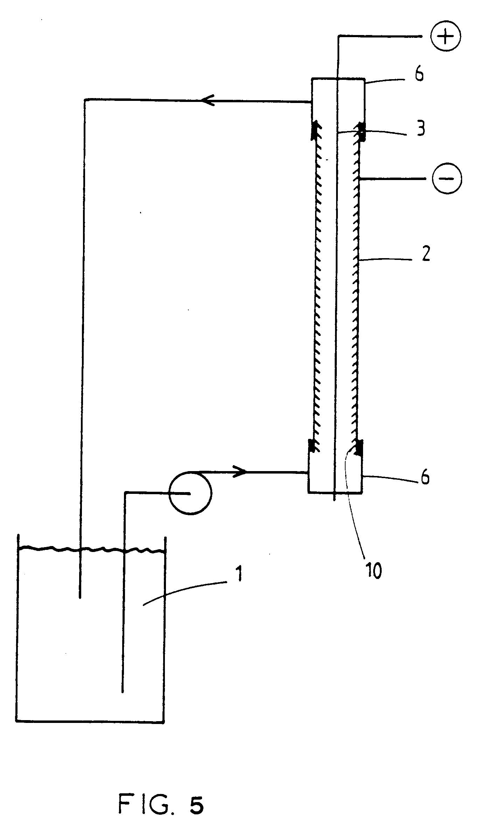

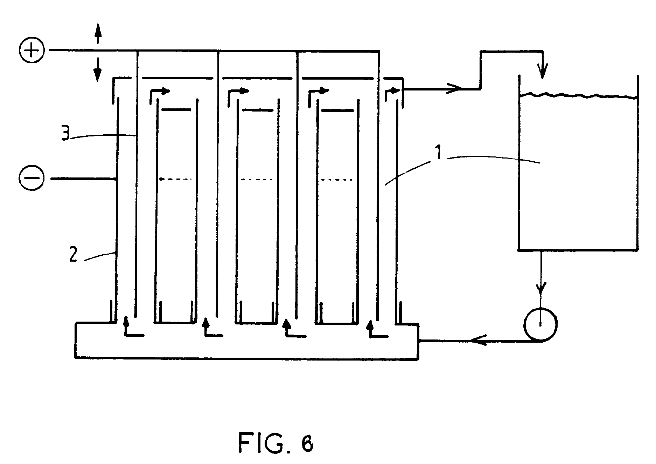

On peut faire circuler le bain (1), typiquement à l'aide d'une pompe, à l'intérieur du tube (2), comme illustré à la figure 5 et à la figure 6.

La figure 6 illustre une autre variante dans laquelle le bain (1) est électrodéposé dans une batterie de tubes (2) en parallèle traversés par une batterie de tiges conductrices (3) comme contre-électrode, l'agitation du bain étant assurée par une pompe de circulation.

Dans ces variantes, on peut centrer la contre-électrode à l'aide d'embouts de centrage isolants (6) qui peuvent par ailleurs assurer la fermeture des extrémités du tube.

Selon une deuxième modalité de l'invention, la contre-électrode comporte une partie conductrice (7) seule active comme contre-électrode et une partie (8) isolée, de préférence munie d'au moins une pièce de centrage en matière isolante (9) solidaire de la contre-électrode et localisée avantageusement à la jonction des deux parties (7) et (8) afin que la partie conductrice (7) ne puisse en aucune façon toucher la paroi intérieure du tube.

La partie active de la contre-électrode, la partie conductrice (7), a une longueur inférieure à celle de la partie non-conductrice (8), et typiquement une longueur comprise entre 0,5 fois et 4 fois le diamètre intérieur du tube (2).

Durant l'électrodéposition, l'intérieur du tube contient du bain (1) et on soumet la partie active de la contre-électrode (7) et le tube (2) à un mouvement relatif de manière à recouvrir progressivement de couche électrodéposée (10) toute la surface intérieure du tube.

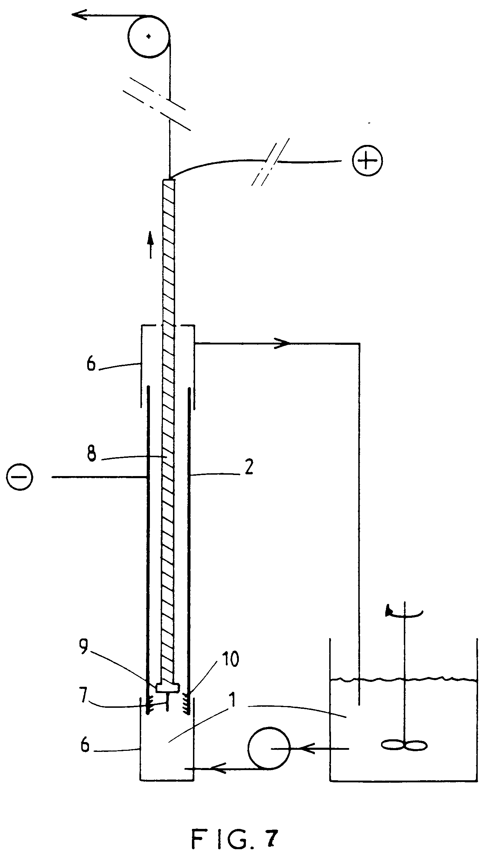

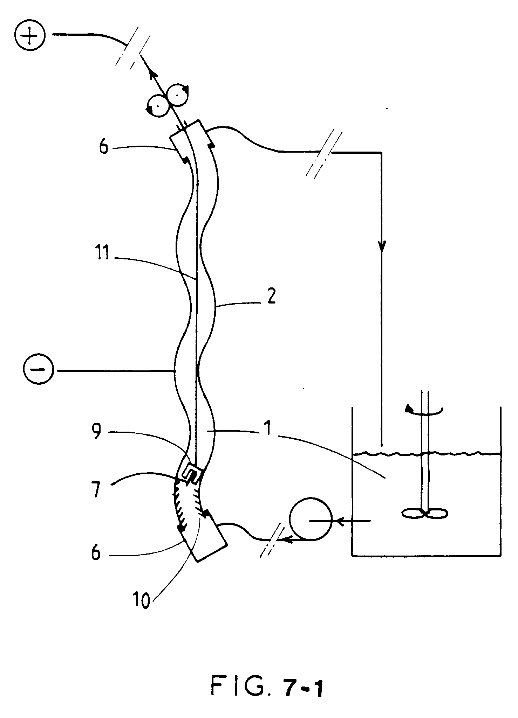

Selon le procédé illustré à la figure 7, on maintient en position fixe le tube (2) dans lequel on fait circuler le bain d'électrophorèse (1) et on déplace la partie conductrice (7) durant l'étape d'électrodéposition d'une extrémité à l'autre du tube.

On peut utiliser comme contre-électrode, comme représenté à la figure 7-1, un ensemble comprenant un câble électrique souple (11) revêtu d'une gaine isolante et une pièce de centrage (9) pour supporter la partie conductrice (7) de faible longueur. Ce type de contre-électrode permet de déplacer une partie conductrice (7) dans des tubes éventuellement non rectilignes en tirant sur le câble (11).

Un des intérêts de cette deuxième modalité de l'invention, en particulier dans le cas des procédés illustrés par les figures 4 et 4-1, réside dans le fait que le risque d'altérer la couche (10) une fois déposée, par exemple par un contact accidentel, devient quasi nul puisque la partie conductrice permettant d'effectuer le dépôt de la couche (10) laisse celle-ci derrière elle, comme un sillage.

En outre, il convient de noter qu'il n'y a pas de migration ou d'écoulement du bain à travers le tube poreux durant l'électrodéposition. En effet, le temps de mouillage du tube poreux est toujours supérieur au temps de séjour du bain à l'intérieur du (des) tube(s). De plus, la couche électrodéposée est parfaitement étanche.

Selon l'invention, le déplacement relatif du tube et de la contre-électrode dans cette deuxième modalité de l'invention peut être automatisé. On peut avantageusement asservir la vitesse de déplacement à un signal électrique d'électrophorèse, qu'il s'agisse de la tension, de la densité de courant, de l'intensité ou de la quantité de courant, de manière à obtenir l'épaisseur de couche souhaitée.

Selon l'invention, on électrodépose des produits solides minéraux finement divisés enrobés de résine, sous une tension comprise entre 50 et 500 V et de préférence sous une tension comprise entre 100 et 300V avec une densité de courant comprise entre 5 et 50 mA/cm$^2$ et de préférence entre 10 et 30 mA/cm$^2$.

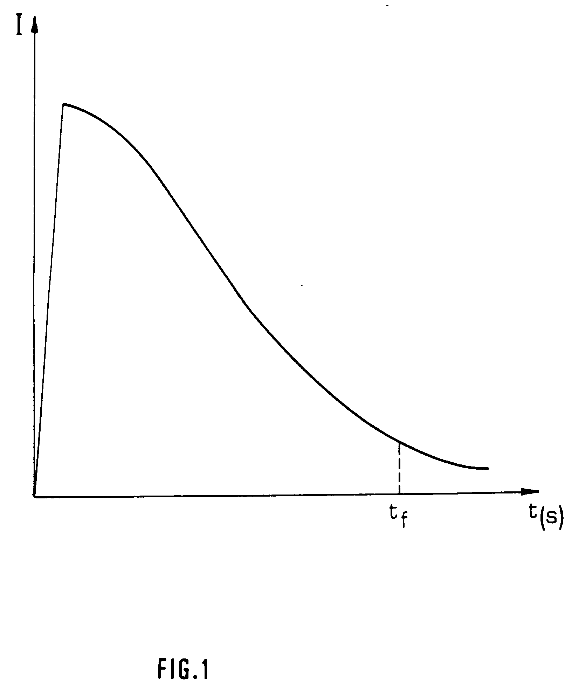

L'électrodéposition peut être conduite à tension constante ou à densité de courant constante; de préférence, elle est conduite à tension constante et densité de courant variable; dans ce cas, l'évolution de la densité de courant, ou de la quantité de courant au cours du temps exprime quantitativement la cinétique de dépôt : la densité de courant chute au bout de 1 à 2 minutes typiquement selon la courbe de la figure 1, quelle que soit la géométrie, traduisant la formation par électrodéposition d'une couche de plus en plus isolante homogène sur l'ensemble du support poreux en contact avec le bain. Ainsi de manière inhérente au procédé, il ne peut y avoir de partie du support poreux, en contact avec le bain, qui ne soit pas recouverte d'une couche isolante de résine enrobant les particules solides; en effet, d'une part, les parties les moins recouvertes sont les plus conductrices, donc les plus actives en électrodéposition, d'où une autorégulation permanente qui conduit à un dépôt homogène sur toute la surface exposée au bain, d'autre part le bain contient toujours un large excès de dispersion fine de sorte que l'électrodéposition pourra se poursuivre jusqu'à ce que la couche isolante soit de résistivité uniforme et donc d'épaisseur uniforme.

L'épaisseur de couche obtenue dépend à la fois de la composition du bain d'électrophorèse, en particulier du rapport M/O, et des conditions d'électrodéposition (durée et surtout tension d'électrodéposition si celle-ci a lieu à tension constante).

Dès la fin de l'électrodéposition, qui dure de 1 à 2 min, on retire du bain le support poreux et on le rince à l'eau. On observe que la couche déposée adhère au support et qu'elle a une consistance telle que la manipulation du support poreux ainsi traité est possible sans précautions particulières ; cette couche a un extrait sec global (M + 0) supérieur à 90 %.

Selon l'invention, on peut éventuellement électrodéposer une nouvelle couche de produit solide minéral, ou plusieurs couches successivement, de granulométrie de plus en plus fine, et/ou de nature chimique différente ; l'électrodéposition peut être réalisée successivement dans plusieurs bains d'électrophorèse, quand on souhaite déposer plusieurs couches de produit solide minéral afin de fabriquer une membrane asymétrique ou une membrane composite. Une membrane asymétrique est ainsi obtenue par dépôts successifs, d'épaisseur contrôlée, de produits solides minéraux de même nature chimique mais de granulométrie de plus en plus fine. De même, une membrane composite est obtenue par dépôts successifs de produits solides minéraux de nature chimique différente pouvant présenter aussi une granulométrie de plus en plus fine. Dans le domaine de ces membranes "multicouches", l'invention présente deux avantages importants par rapport à l'art antérieur : d'une part le dépôt par électrophorèse permet un dépôt régulier de couches de faible épaisseur, de sorte que des membranes "multicouches" de petit diamètre de pore et de faible épaisseur totale, donc de fort débit, sont accessibles grâce à l'invention. D'autre part, contrairement à l'art antérieur, les depôts successifs sont réalisés sans traitement intermédiaire entre chaque dépôt, notamment sans traitement thermique, ce qui est un grand avantage à la fois économique et technique.

Selon l'invention, le support poreux ainsi revêtu est soumis à un traitement thermique de façon à éliminer les faibles quantités d'eau et de solvants organiques encore présents dans la couche électrodéposée, à éliminer ensuite les résines et à réaliser un frittage contrôlé des fines particules minérales. En outre, lorsqu'on part de solides minéraux sous forme de gels peptisés, le traitement thermique entraîne, de manière généralement connue, des modifications chimiques, physiques ou cristallographiques prises en compte dans le choix initial du gel peptisé.

Si le support poreux est oxydable, le traitement thermique est réalisé sous atmosphère neutre ou réductrice par exemple sous $H_2$, Ar, $N_2$ avec 10 % en volume de $H_2$; si le support n'est pas oxydable, par exemple dans le cas d'un support en céramique conductrice, une atmosphère oxydante peut être utilisée.

Typiquement, le traitement thermique comporte deux paliers, un premier entre 200° et 500°C, généralement vers 300° C, pour éliminer les produits volatils, un second à la température de frittage Tf du solide minéral finement divisé, température comprise entre 500° et 2500° C et généralement entre 800° et 1200°C, la durée de ces paliers est fonction de la teneur en matière volatile et du taux de frittage souhaité.

Les montées en température de palier se font avec une vitesse de chauffage comprise entre 0,1 et 10° C/mn. L'étape finale de frittage est un des paramètres qui contrôlent le diamètre final des pores et le volume poreux de la membrane filtrante; pour un solide minéral finement divisé donné, l'homme de l'art détermine la température de frittage et la durée du frittage permettant d'obtenir le diamètre final de pore et le volume poreux souhaités.

A titre indicatif, l'invention permet d'obtenir des membranes minérales d'épaisseur comprise entre 0,1 et 20 µm avec des diamètres de pores allant de 0,001 µm et 1 µm.

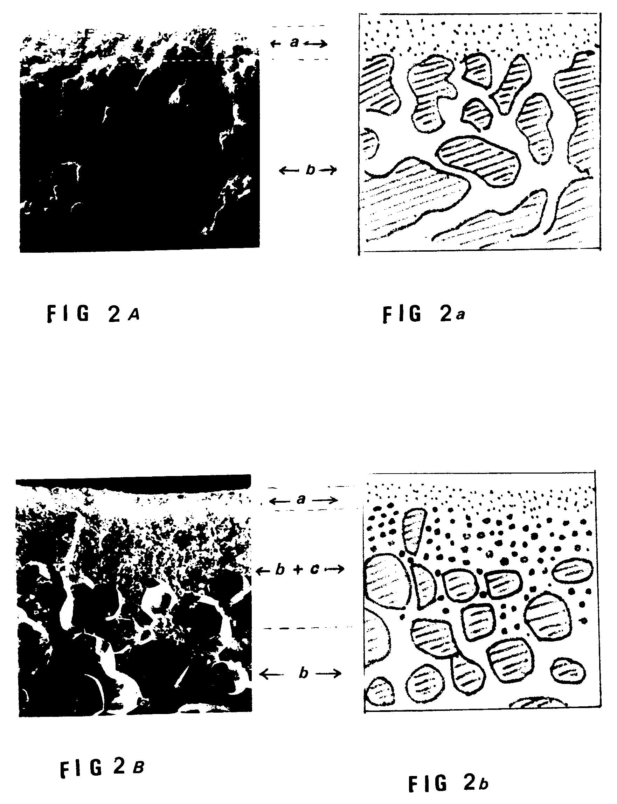

Des examens en coupe au microscope (figure 2A) ont montré l'ancrage de la membrane minérale sur le support : il y a une légère pénétration et imbrication de la membrane minérale au support poreux de sorte qu'ils ne peuvent être désolidarisés.

Lorsqu'on compare en coupe au microscope une membrane et son support poreux obtenue selon l'invention (figure 2A) et selon la technique d'engobage de l'art antérieur (figure 2B), on constate que, dans l'art antérieur, une couche intermédiaire est nécessaire pour éviter une trop grande pénétration de la membrane dans le support.

Les avantages de l'invention sont nombreux, de différentes natures et se situent à différents stades de sa mise en oeuvre : l'invention permet d'abord d'obtenir des dispersions fines de bonne stabilité, notamment de bonne stabilité rhéologique, ce qui permet une grande souplesse d'exploitation, elle permet ensuite de déposer une membrane de filtration sur un support poreux conducteur de n'importe quelle forme, de manière rapide, précise, uniforme et reproductible.

Un autre avantage de l'invention réside dans le fait que le dépôt a un extrait sec élevé (supérieur à 90 %) ce qui a trois conséquences importantes sur le plan pratique : d'une part, les supports poreux traités selon l'invention sont manipulables sans précautions particulières, d'autre part la phase initiale de séchage et d'élimination de l'eau et des solvants organiques est supprimée, enfin ce type de dépôt conduit à des membranes sans faïençage ni fissuration, évitant ainsi soit la mise au rebut, soit des opérations de reprise fort coûteuses. Dans le cas de l'engobage, le pourcentage d'extrait sec est bien plus faible et compris entre 40 et 70 %; de ce fait, la couche déposée est très fragile et ne peut être manipulée qu'après un séchage long et parfaitement contrôlé, généralement pendant plus de 24 h. Le procédé selon l'invention permet en outre de fabriquer une grande diversité de membranes filtrantes, notamment de membranes à plusieurs couches, asymétriques ou composites notamment par l'emploi de bains d'électrophorèse successifs, membranes dont le procédé permet de maîtriser l'épaisseur et la porosité tout en assurant un excellent accrochage sur le support.

Le procédé selon l'invention est particulièrement économique : d'une part le dépôt de la couche de produits solides minéraux est très rapide, d'autre part une phase initiale de séchage, supérieure à 24h selon l'art antérieur, n'est plus nécessaire; enfin, dans le cas de membranes multicouches, il n'est pas nécessaire, comme dans l'art antérieur, de faire subir à la membrane un traitement thermique entre chaque dépôt.

Un autre avantage important de l'invention est la possiblité de modéliser le procédé, de mettre le procédé entièrement sous contrôle ce qui permet de fabriquer à la demande, des membranes filtrantes ayant des caractéristiques bien déterminées et prédéterminées telles que l'épaisseur, le diamètre des pores, le volume poreux.

Compte tenu de la vitesse de dépôt, ce procédé peut être dans certains cas mis en oeuvre en continu et dans tous les cas automatisé puisque l'avancement du dépôt se traduit par un "signal" électrique d'électrophorèse, tel que l'intensité ou la densité de courant si le dépôt a lieu à tension constante ou tel que la tension électrique

EP 0 388 330 B1

ou tel que la quantité de courant; le "signal" électrique choisi de préférence est la densité ou la quantité de courant. En particulier, la phase de dépôt peut être interrompue au bout d'un temps prédéterminé ou de préférence quand le "signal" électrique choisi a atteint une valeur de consigne prédéterminée.

Le procédé selon l'invention permet donc de maîtriser à la fois le champ électrique, la composition du bain et la durée de dépôt, de sorte que les membranes filtrantes, en particulier celles des tubes de filtration obtenues selon l'invention, ont les mêmes caractéristiques d'un tube à l'autre et également pour un même tube, d'une extrémité à l'autre. Ainsi, l'obtention d'une membrane de qualité constante est, de manière évidente, très intéressante sur un plan pratique.

Un autre avantage de l'invention est qu'elle se prête au traitement d'un grand nombre de tubes poreux simultanément. Il est facile de passer du traitement d'un seul tube au traitement en parallèle d'un grand mombre de tubes, comme à la figure 6 par exemple, de sorte que l'invention constitue un procédé économique de fabrication de membranes filtrantes.

Ainsi, l'invention présente de grands avantages d'ordre économique, d'ordre technique, concernant à la fois la mise en oeuvre du procédé lui-même et le produit obtenu.

La membrane semi-perméable déposée sur un support poreux selon l'invention peut ensuite être utilisée en tant que telle ou comme élément d'un appareil comportant plusieurs éléments, pour les diverses applications industrielles où les techniques séparatives telles que l'osmose inverse, la microfiltration ou l'ultrafiltration trouvent une application, que ce soit lors du traitement de liquides tels que, à titre indicatif, la stérilisation, le dessalement de l'eau, la stérilisation ou la concentration de produits alimentaires, de boissons, de lactosérum, l'épuration de liquides industriels, des huiles, que ce soit lors du traitement de vapeurs, de fumées, de gaz tel que l'air ou que ce soit pour une application plus spécifique telle que la séparation isotopique.

EXEMPLE 1 : membrane d'ultrafiltration en zircone sur support inox poreux

Poudre de zircone utilisée : $ZrO_2$ UHP à 18 m$^2$/g de chez CRICERAM
  Soit le mélange suivant :

| | |
|---|---|
| $H_2O$ | 70 % |
| Résidrol SWE 5186 | 10 % |
| $ZrO_2$UHP | 20 % |

Ce mélange est soumis à une agitation violente de type "Turrax" destinée à enrober les grains de zircone dont le diamètre moyen est centré sur 0,3 µm. L'agitation au "Turrax" a lieu pendant 10 min à 20 000 t/min.
Les caractéristiques du bain sont alors :

| | |
|---|---|
| PH | 6 |
| E.S. = | 30 % |
| M/O = | 2 |
| $\rho$ = | 800 $\Omega$ .cm |

Après vieillissement de 24h sous agitation lente, le dépôt sur une plaque d'inox poreuse (porosité 35 %, diamètre des pores entre 4 et 8 µm) peut avoir lieu.

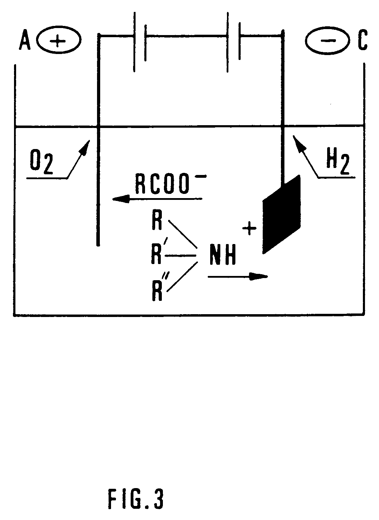

Le tableau donne la valeur des épaisseurs de couche déposée en fonction des caractéristiques électriques imposées aux bornes de circuit réalisé selon le schéma de principe de la figure 3 :

| V Volt | I mA/cm$^2$ | épaisseur déposée | Temps de passage du courant |
|---|---|---|---|
| 100 | 12,5 | 20 µm | 90 s |
| 200 | 12,5 | 40 µm | 90 s |

La couche ainsi déposée peut être directement manipulée et peut être soumise directement à l'étape finale du traitement thermique. Celui-ci se décompose en plusieurs rampes de montée en température pour tenir compte du départ des matières organiques d'une part mais également du niveau de productivité que l'on veut

7

le plus élevé possible.

Sans qu'il soit limitatif, un programme de traitement thermique type peut se décrire de la façon suivante :

atmosphère         : mélange Ar/$H_2$ $H_2$ à 10 % en volume

débit                  : renouvellement du volume du four 15 fois par heure

    Programme de montée :

    . 1°C/min de 25°C à 300°C

    . palier 1h à 300°C

    . 0,5°C/min de 300°C à 900°C

    . 0,3°C/min de 900°C à Tf

    . 950°C < Tf < 1100°C

    . palier 1h à Tf

    . refroidissement de 0,5°C/min jusqu'à 800°C puis refroidissement naturel du bain

Après ce traitement thermique, on obtient une couche de zircone homogène dont l'épaisseur dépend de la teneur M initiale du bain utilisé et de l'épaisseur de la couche déposée par cataphorèse. Dans notre cas :4 μm pour le dépôt réalisé à 100 V et 8 μm pour celui réalisé à 200V.

Mesuré au porosimètre à mercure, le diamètre des pores de la couche de zircone est centré sur 0,025 μm pour un traitement thermique effectué à Tf = 1050°C.

EXEMPLE 2 : membrane d'ultrafiltration en zircone sur support inox poreux

La poudre de zircone utilisée est dans ce cas de granulométrie plus fine : poudre $ZrO_2$ UHP à 40 m2/g de chez CRICERAM.

Suivant un autre mode de préparation du bain de cataphorèse, on réalise le mélange de la façon suivante :

Solution A :

| | |
|---|---|
| $H_2O$ | 34,5 % |
| Résidrol SWE 5186 | 15,0 % |
| $ZrO_2$ UHP 40 m2/g | 35,0 % |
| Butyl-glycol | 15,5 % |

Le mélange de cette solution A est effectué dans le mélangeur "Turbulat" pendant 24h avec un ajout de billes de broyage en zircone de 1 mm de diamètre. Le volume de remplissage de la jarre de broyage étant de 36 % le rapport de charge, médias de broyage sur poudre de zircone est égal à 29 %.

    Dans ce même temps une solution B est préparée par ajout de :

Solution B

| | |
|---|---|
| $H_2O$ | 56,6 % |
| Résidrol SWE 5186 | 36,0 % |
| Ethyl-glycol | 5,0 % |
| Ethyl-2-hexanol | 2,4 % |

La solution B additionnée à la solution A et une certaine quantité d'eau va permettre d'ajuster parfaitement les paramètres E.S. et M/O aux valeurs souhaitées.

Rôle des solvants :

L'éthyl-2-hexanol est un antimoussant qui permet l'élimination des bulles d'air résiduelles qui nuisent à l'homogénéité de surface du dépôt.

Les éthyl et butyl-glycol se distiguent pour leur affinité pour l'eau (hydrophilie) ou pour le milieu organique (lipophilie), mais également par leur polarité; suivant leur affinité, ils se répartiront entre la phase aqueuse et la phase organique (résine) de l'émulsion.

L'éthyl-glycol est le plus polaire des deux solvants; il est très soluble dans l'eau et sa répartition sera très favorable à cette phase (environ 80 %). Le butyl-glycol, moins polaire, n'est que partiellement soluble dans l'eau et sa répartition se fera à 50 % dans l'eau et 50 % dans la phase organique (résine).

De par sa polarité et son affinité pour l'eau, l'éthyl-glycol joue un rôle important sur la résistivité du bain en l'abaissant sensiblement; il permet donc de corriger la résistivité et de l'ajuster à la valeur souhaitée.

Le butyl-glycol a la même influence que l'éthyl-glycol sur la résistivité, mais du fait qu'il est également présent dans la résine lors du dépôt il contribue à diminuer la résistance électrique du film déposé et donc à augmenter son épaisseur si cela est nécessaire.

Le bain de cataphorèse est constitué finalement par :

| | |
|---|---|
| Solution A | 23 ,1 % |
| Solution B | 23,4 % |

H$_2$O        53,5 %

```
        soit E.S.   = 20 %              M/O = 0,68
        ρ           = 1050    Ω.cm      PH  ⋩ 6
```

Le dépôt est réalisé comme décrit dans l'exemple 1.

Il permet suivant les tensions appliquées entre 100 et 300V à 20 mA/cm$^2$ d'intensité de régler l'épaisseur entre 15 et 50 μm.

Le traitement thermique effectué suivant l'exemple 1 à 1000° C aboutit à une couche de zircone dont l'épaisseur est parfaitement contrôlée entre 1,5 et 4 μm et dont le spectre de pore est centré sur le diamètre moyen de 0,015 μm plus faible que dans l'exemple 1, dû au fait que la poudre de zircone utilisée a une granulométrie plus fine.

EXEMPLE 3 : membrane de microfiltration en alumine sur support inox poreux

Suivant l'exemple 2, on substitue à la zircone UHP à 40 m$^2$/g une alumine P 172 (commercialisée par la société CERALTECH) de surface spécifique égale à 6 m$^2$/g constitué de particules élémentaires centrées sur un diamètre moyen de 0,7 μm.

On réalise un bain de cataphorèse en prenant les proportions suivantes :

Solution A     9,43 %

Solution B     42,34 %

H$_2$O          48,23 %

Ces caractéristiques sont :

E.S.       = 20 %

M/O      = 0,2

ρ         = 1000 Ω.cm

Sous une tension de 300V pour une intensité de 20 mA/cm$^2$ appliquée pendant 90s, l'épaisseur déposée est de 50 μm.

Après un traitement thermique effectué à 1050°C suivant le protocole décrit dans l'exemple 1, on obtient une couche en alumine de 1,6 μm d'épaisseur dont le diamètre des pores est centré sur 0,3 μm.

EXEMPLE 4 : membrane d'ultrafiltration en carbure de silicium sur support composite carbone/carbone :

La poudre de SiC utilisée est de très forte surface spécifique (80 m$^2$/g) constituée de grains sphériques monodispersés de 0,15 μm de diamètre.

On réalise le mélange suivant :

H$_2$O               70,0 %

Résidrol SWE 5219     1,8 %

Acide acétique         1,8.10$^{-3}$ mole

SiC                  18,2 %

Butyl-glycol           7,0 %

Ethyl-2-hexanol       3,0 %

Le brassage est effectué au "Turrax" à 20 000 Tr/min pendant 10 min, après quoi le mélange est maintenu sous agitation lente pendant 24h avant son utilisation. Le bain a les caractéristiques suivantes :

E.S.       = 20 %

M/O      = 10 %

ρ         = 500 Ω.cm

A 100V pour une intensité de 20 mA/cm$^2$ imposée pendant 90s, on réalise un dépôt de 50 μm d'épaisseur à l'intérieur d'un tube composite poreux en carbone/carbone. L'extérieur du tube ayant au préalable été isolé électriquement par une gaine thermorétractable.

Après un traitement thermique effectué à 1100° C dans les mêmes conditions que celles décrites dans les exemples précédents, on obtient une couche de carbure de silicium (SiC) dont l'épaisseur est de 9,5 μm pour une porosité centrée sur 0,02 μm en diamètre.

EXEMPLE 5

On a étudié l'influence de la géométrie d'un tube poreux et celle d'une contre-électrode sur l'épaisseur de la membrane à l'intérieur du tube :

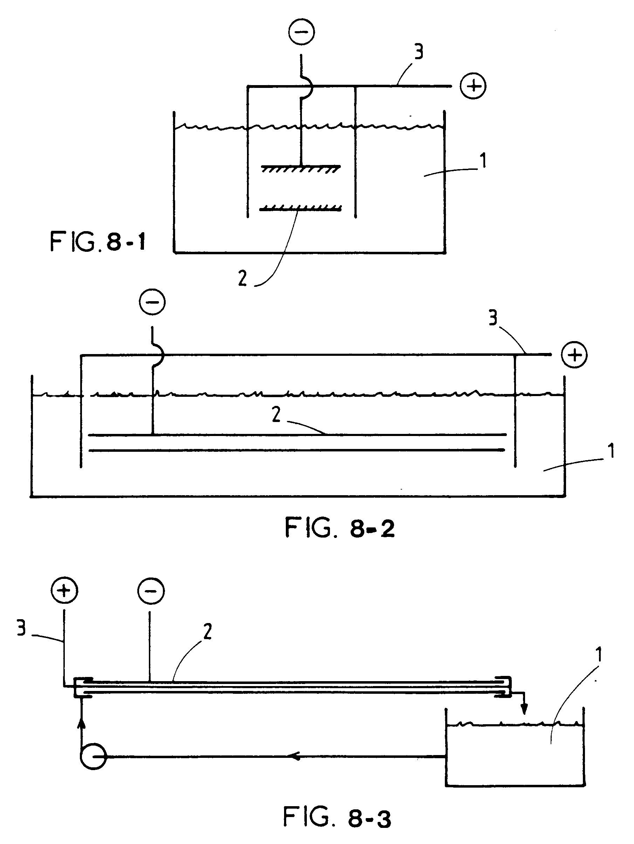

Essai 1 :     tube inox avec L = 10 cm et D = 5 cm
              contre-électrode en forme de plaque (figure 8-1)

Essai 2 :     tube inox avec L = 50 CM ET D = 1 cm
              contre-électrode en forme de plaque (figure 8-2)

Essai 3 :     tube inox avec L = 50 cm et D = 1 cm
              contre-électrode centrée à l'intérieur du tube (figure 8-3)

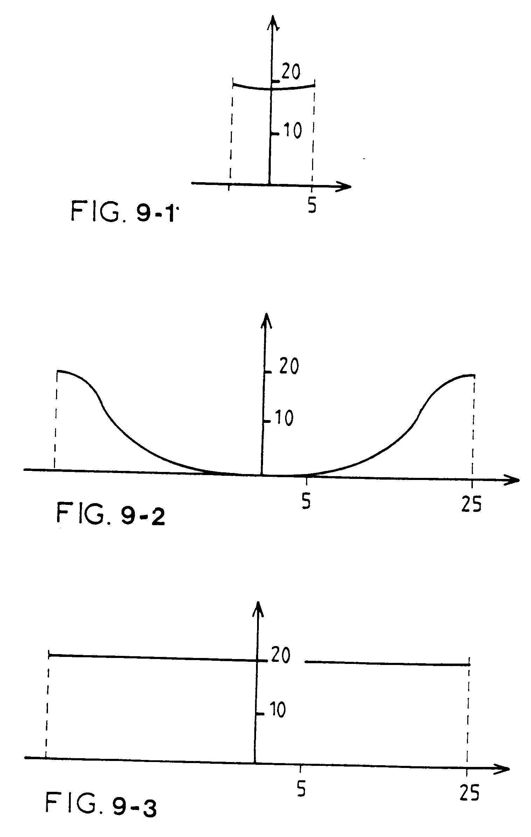

Les autres paramètres expérimentaux sont ceux de l'exemple 1 avec une tension d'électrodéposition de 200 V. On a mesuré l'épaisseur de la membrane déposée en fonction de la distance séparant le milieu du tube pris pour origine et les deux extrémités. Les résultats apparaissent sur les figures 9-1, 2 et 3 qui correspondent aux essais 1 à 3. L'avantage d'une contre-électrode centrée apparaît de manière évidente.

## DESCRIPTION DES FIGURES

La figure 1 illustre une courbe intensité I du courant d'électrophorèse en ordonnée en fonction du temps t en abscisse, exprimé en secondes : tf indique le temps de fin de dépôt -90 secondes dans les exemples.

La figure 2A est une vue en coupe d'une couche filtrante (a) selon l'invention et son support (b) (schématisée à la figure 2a par souci de clarté).

La figure 2B est une vue en coupe d'un élément filtrant selon l'art antérieur comportant une couche filtrante (a), d'une couche intermédiaire (c) qui pénètre profondément dans le support (b) (schématisée à la figure 2b par souci de clarté).

La figure 3 schématise une cellule de cataphorèse avec RCOO⁻ qui symbolise la partie anionique soluble de la résine électrodéposable et RR'R" NH⁺ qui symbolise la partie cationique qui s'électrodépose à la cathode.

La figure 4 représente un bain d'électrophorèse (1) dans lequel est plongé un tube conducteur poreux (2) servant de cathode, avec une contre-électrode (3) servant d'anode, centrée à l'intérieur du tube sur toute sa longueur. Par électrodéposition, il se forme la couche (10) qui donnera après traitement ultérieur une membrane semi-perméable.

La figure 5 représente un tube poreux (2) dans lequel circule, au moyen d'une pompe, un bain d'électrophorèse (1), les extrémités du tube étant fermées par les embouts de centrage (6) en matière isolante.

La figure 6 représente une batterie de tubes poreux (2) en parallèle positionnés verticalement sur un bac d'alimentation en bain (1) relié à un réservoir de bain, avec une batterie de contre-électrodes (3) centrées dans les tubes.

La figure 7 représente un tube poreux (2) à l'intérieur duquel circule un bain d'électrophorèse (1) et une contre-électrode mobile constituée d'une partie conductrice (7) servant d'anode, d'une partie (8) dans laquelle l'élément conducteur est recouvert d'un matériau isolant, et d'une pièce de centrage (9) en matériau isolant. La couche (10) se forme progressivement. au fur et à mesure que monte la contre-électrode.

La figure 7-1 représente une contre-électrode mobile, comme à la figure 7, mais dans le cas d'un tube poreux (2) non rectiligne, avec une pièce de centrage (9) qui maintient la partie conductrice (7) à distance de la paroi du tube, et que l'on déplace en tirant sur le câble électrique (11) isolé.

Les figures 8-1, 2 et 3 illustrent la géométrie des tubes poreux et des contre-électrodes utilisés dans l'exemple 5.

Sur les courbes 9-1, 2 et 3 figurent en abscisse la distance en cm entre le milieu du tube pris comme origine et son extrémité pour chacun des trois essais de l'exemple, et en ordonnée l'épaisseur de la membrane en μm.

## Revendications

1.  Procédé de fabrication d'un élément de microfiltration, d'ultrafiltration, d'osmose inverse constitué d'une membrane minérale semi-perméable sur un support conducteur poreux caractérisé en ce qu'il comporte les étapes suivantes :

    a) on prépare un bain d'électrophorèse (1) en dispersant finement un ou plusieurs produits solides minéraux inertes dans un milieu liquide tel que l'eau, l'eau en mélange avec des solvants organiques au moins partiellement hydrosolubles, en présence d'une résine d'enrobage hydrosoluble électrodéposable,

    b) après avoir mis ledit bain d'électrophorèse (1) en contact avec tout ou partie du support conducteur poreux (2) de géométrie quelconque, pris comme électrode et avec une contre-électrode métallique (3), on dépose par electrophorèse sur toute la surface du support conducteur poreux qui est en contact avec le bain d'électrophorèse, au moins une couche (10) de produit(s) solide(s) minéral(aux) enrobé(s) de résine électrodéposable,

c) on traite thermiquement ledit support conducteur poreux revêtu de une ou plusieurs couches de produit solide minéral enrobé de résine électrocoagulée de façon à éliminer l'eau, les solvants organiques restants, les matières organiques puis à fritter la couche de poudre minérale jusqu'à obtention de la finesse de pore souhaitée.

2. Procédé selon la revendication 1 dans lequel ledit produit solide minéral inerte est un oxyde ou un nitrure ou un carbure minéral sous forme finement divisée seul ou en mélange, par exemple la zircone ($ZrO_2$), l'alumine ($Al_2O_3$), l'oxyde de titane ($TiO_2$) la silice ($SiO_2$), l'oxyde d'yttrium ($Y_2O_3$), la mullite ($3Al_2O_3$-$2SiO_2$), la cordiérite ($2Al_2O_3$-$2MgO$-$5SiO_2$), le titanate d'aluminium ($Al_2TiO_5$), le spinelle de magnésium ($Al_2MgO_4$), le zircon ($ZrSiO_4$), le carbure de silicium (SiC), le nitrure de silicium $Si_3N_4$, SiAl O N.

3. Procédé selon la revendication 1 dans lequel ledit produit solide mineral inerte est sous forme de gel peptisé à base d'hydroxyde de Al, Ti, Zr, Si, Y ou de mélanges de ces hydroxydes avec d'autres métaux pouvant conduire à la formation de spinelle.

4. Procédé selon l'une quelconque des revendications 2 ou 3 dans lequel ledit produit solide minéral inerte seul ou en mélange avec d'autres produits solides minéraux inertes est dispersé finement dans un milieu liquide constitué de 30 à 100 % en poids d'eau et de 0 à 70 % en poids d'un ou plusieurs solvants organiques au moins partiellement hydrosolubles, en présence d'une résine hydrosoluble électrodéposable telle qu'une résine déposable à la cathode par cataphorèse ou une résine déposable à l'anode par anaphorèse.

5. Procédé selon la revendication 4 dans lequel on poursuit la dispersion de ladite poudre minérale de façon à obtenir une granulométrie moyenne comprise entre 10 $\mu$m et 2 nm.

6. Procédé selon la revendication 5 dans lequel on ajuste la composition dudit bain d'électrophorèse par ajout éventuel d'eau, de solvant organique au moins partiellement hydrosoluble, de résine hydrosoluble électrodéposable, audit produit solide minéral finement dispersé dans un milieu liquide, de façon à avoir un rapport M/O compris entre 0,1 et 25 et une somme M+O comprise entre 5 et 45 % avec M égal au pourcentage pondéral de poudre minérale dans le bain d'électrophorèse et O égal au pourcentage pondéral de résine d'enrobage (exprimé en résine 100 %) dans le bain d'électrophorèse.

7. Procédé selon la revendication 6 dans lequel ledit rapport M/O est choisi de préférence entre 0,5 et 10 et dans lequel ladite somme M+O est choisie de préférence entre 15 et 30 %.

8. Procédé selon l'une quelconque des revendications 1 à 7 dans lequel on dépose par électrophorèse sur ledit support conducteur poreux de géométrie quelconque, ladite couche de produit solide minéral enrobé de résine qui s'électrodépose, sous une tension électrique comprise entre 50 et 500 V et de préférence entre 100 et 300 V et avec une densité de courant comprise entre 5mA/cm$^2$ et 50 mA/cm$^2$ et de préférence entre 10 mA/cm$^2$ et 30 mA/cm$^2$.

9. Procédé selon une quelconque des revendications 1 à 8 dans lequel on électrodépose une nouvelle couche de produit solide minéral, ou plusieurs couches successivement, de granulométrie de plus en plus fine, et/ou de nature chimique différente.

10. Procédé selon l'une quelconque des revendications 1 à 9 dans lequel ledit support conducteur poreux de géométrie quelconque et éventuellement flexible a une partie de sa surface soustraite au contact du bain d'électrophorèse et dont l'autre partie a des pores de diamètre compris entre 0,1 et 50 $\mu$m.

11. Procédé selon une quelconque des revendications 1 à 10 dans lequel ledit support conducteur poreux est un tube (2) de grande longueur par rapport au diamètre, avec typiquement un rapport longueur/diamètre intérieur supérieur à 4.

12. Procédé selon la revendication 11 dans lequel on centre à l'intérieur dudit tube une contre-électrode (3), et après avoir mis ledit bain d'électrophorèse (1) en contact avec tout ou partie de l'intérieur du tube (2) on dépose par électrophorèse sur sa surface intérieure une couche (10) de produit(s) solide(s) mineral(aux) enrobé(s) de résine qui s'électrocoagule, en déplaçant éventuellement la contre-électrode (3) selon l'axe central du tube (2).

13. Procédé selon la revendication 12 dans lequel la contre-électrode (3) est une tige conductrice sur toute la longueur du tube et centrée par rapport au tube (2) par exemple grâce à des embouts isolants (6), et dans lequel on peut faire circuler le bain d'électrophorèse (1) à l'intérieur du tube (2) durant l'étape d'électrodéposition.

14. Procédé selon la revendication 12 dans lequel la contre-électrode comporte une partie conductrice (7) seule active comme contre-électrode et une partie isolée (8), de préférence munie d'au moins une pièce de centrage (9) solidaire de la contre-électrode et localisée avantageusement au niveau de la jonction de la partie conductrice (7) et de la partie isolée (8), et dans lequel, la partie conductrice (7) étant immergée dans le bain d'électrophorèse, on la soumet à un déplacement relatif par rapport au tube (2) d'une extrémité à l'autre de celui-ci de manière à obtenir une couche électrodéposée sur toute sa surface intérieure.

15. Procédé selon la revendication 14 dans lequel la partie conductrice (7) a une longueur inférieure à celle de la partie isolée (8) et a une longueur de préférence comprise entre 0,5 fois et 4 fois le diamètre intérieur du tube (2).

16. Procédé selon la revendication 14 dans lequel le tube (2) peut ne pas être rectiligne, dans lequel la contre-électrode est constituée d'une partie isolée flexible (11) et d'une partie conductrice (7) solidaire de la pièce de centrage (9) et dans lequel on effectue l'électrodéposition en déplaçant la contre-électrode en exerçant un effort de traction sur la partie isolée flexible (8).

17. Procédé selon une quelconque des revendications 14 à 16 dans lequel on asservit la vitesse de déplacement relatif du tube (2) par rapport à la partie conductrice (7) à un signal électrique d'électrophorèse choisi parmi la tension, la densité de courant, l'intensité ou la quantité de courant.

18. Procédé selon une quelconque des revendications 1 à 17 dans lequel on réalise l'électrodéposition simultanément sur plusieurs supports conducteurs poreux.

19. Procédé selon une quelconque des revendications 1 à 18 dans lequel le dépôt par électrophorèse est asservi à un signal électrique d'électrophorèse choisi parmi la tension, la densité de courant, l'intensité ou la qualité de courant et en particulier est interrompu quand le signal électrique atteint une valeur de consigne prédéterminée.

20. Procédé selon une quelconque des revendications 1 à 19 dans lequel la température de frittage est comprise entre 500 et 2500°C et de préférence entre 800 et 1200°C.

21. Elément ou ensemble d'éléments de microfiltration, d'ultrafiltration ou d'osmose inverse obtenus selon l'une quelconque des revendications 1 à 20.


**Patentansprüche**

1. Verfahren zur Herstellung eines Elements zur Mikrofiltration, Ultrafiltration und Umkehrosmose, das aus einer semipermeablen anorganischen Membran auf einem leitenden porösen Träger besteht,
**dadurch gekennzeichnet,**
daß es folgende Schritte umfaßt:
a) Herstellung eines Elektrophoresebades (1) durch feines Dispergieren eines oder mehrerer fester inerter anorganischer Materialien in einem flüssigen Medium, wie Wasser oder Wasser im Gemisch mit zumindest teilweise wasserlöslichen organischen Lösungsmitteln, in Gegenwart eines wasserlöslichen und elektrisch abscheidbaren Harzes zur Ummantelung,
b) Inkontaktbringen des Elektrophoresebads (1) mit dem als Elektrode dienenden leitenden porösen Träger (2) beliebiger Geometrie als ganzem oder mit einem Teil davon sowie mit einer metallischen Gegenelektrode (3) und anschließende elektrophoretische Abscheidung mindestens einer Schicht (10) aus einem oder mehreren festen anorganischen Materialien, die mit dem elektrisch abscheidbaren Harz beschichtet sind,
c) thermische Behandlung des mit einer oder mehreren Schichten aus mit dem elektrokoagulierten Harz ummenteltem festem anorganischem Material beschichteten leitenden porösen Trägers zur Abtrennung des Wassers, der restlichen organischen Lösungsmittel und der organischen Stoffe und zum anschließenden Sintern der Schicht aus dem anorganischen Pulver bis zur Erzielung der gewünschten Porenfeinheit.

2. Verfahren nach Anspruch 1, wobei das feste inerte anorganische Material ein anorganisches Oxid, Nitrid oder Carbid als Einzelmaterial oder im Gemisch in feinverteilter Form ist, beispielsweise Zirkoniumoxid ($ZrO_2$), Aluminiumoxid ($Al_2O_3$), Titandioxid ($TiO_2$), Siliciumdioxid ($SiO_2$), Yttriumoxid ($F_2O_3$), Mullit ($3Al_2O_3.2SiO_2$), Cordierit ($2Al_2O_3.2MgO.5SiO_2$), Aluminiumtitanat ($Al_2TiO_5$), Magnesiumspinell ($Al_2MgO_4$), Zirkon ($ZrSiO4$), Siliciumcarbid (SiC), Siliciumnitrid ($Si_3N_4$) oder SiAlON.

3. Verfahren nach Anspruch 1, wobei das feste inerte anorganische Material in Form eines peptisierten Gels auf der Basis eines Hydroxids von Al, Ti, Zr, Si, Y oder Gemischen dieser Hydroxide mit Hydroxiden anderer Metalle, die zur Spinellbildung führen können, vorliegt.

4. Verfahren nach Anspruch 2 oder 3, wobei das feste inerte anorganische Material allein oder im Gemisch mit anderen festen inerten anorganischen Materialien in einem flüssigen Medium fein dispergiert wird, das 30 bis 100 Gew.-% Wasser und 0 bis 70 Gew.-% eines oder mehrerer organischer Lösungsmittel enthält, die mindestens teilweise wasserlöslich sind, in Gegenwart eines elektrisch abscheidbaren wasserlöslichen Harzes, wie z.B. eines durch Kataphorese an der Kathode abscheidbaren Harzes oder eines durch Anaphorese an der Anode abscheidbaren Harzes, fein verteilt wird.

5. Verfahren nach Anspruch 4, wobei das Dispergieren des anorganischen Pulvers so vorgenommen wird, daß eine mittlere Korngröße zwischen 10 μm und 2 nm erhalten wird.

6. Verfahren nach Anspruch 5, wobei die Zusammensetzung des Elektrophoresebades durch ggfs. vorgenommene Zugabe von Wasser, mindestens teilweise wasserlöslichem organischem Lösungsmittel und elektrisch abscheidbarem wasserlöslichem Harz zu dem in einem flüssigen Medium feinverteilten festen anorganischen Material so eingestellt wird, daß ein Verhältnis M/O von 0,1 bis 25 und eine Summe M+O von 5 bis 45 % resultieren, wobei M den Mengenanteil des anorganischen Pulvers im Elektrophoresebad in Gew.-% und 0 den Mengenanteil des zur Ummantelung dienenden Harzes (ausgedrückt als 100 %iges Harz) im Elektrophoresebad in Gew.-% bedeuten.

7. Verfahren nach Anspruch 6, wobei das Verhältnis M/O vorzugsweise zwischen 0,5 und 10 und die Summe M+O vorzugsweise zwischen 15 und 30 % gewählt werden.

8. Verfahren nach einem der Anspruche 1 bis 7, wobei die Schicht aus dem mit dem elektrisch abscheidbaren Harz ummantelten anorganischen Material unter einer elektrischen Spannung von 50 bis 500 V und vorzugsweise 100 bis 300 V und bei einer Stromdichte von 5 bis 50 mA/cm² und vorzugsweise 10 bis 30 mA/cm² auf dem porösen leitenden Träger beliebiger Geometrie elektrophoretisch abgeschieden wird.

9. Verfahren nach einem der Ansprüche 1 bis 8, wobei eine weitere Schicht aus festem anorganischem Material oder mehrere Schichten mit immer feiner werdender Korngröße und/oder unterschiedlicher chemischer Natur elektrisch abgeschieden werden.

10. Verfahren nach einem der Ansprüche 1 bis 9, wobei ein Teil des leitenden porösen Trägers beliebiger Geometrie, der ggfs. flexibel ist, dem Kontakt mit dem Elektrophoresebad entzogen ist, wobei der übrige Teil Poren mit einem Durchmesser von 0,1 bis 50 μm aufweist.

11. Verfahren nach einem der Ansprüche 1 bis 10, wobei der leitende poröse Träger ein Rohr (2) mit einer in Bezug auf seinen Durchmesser großen Länge ist, bei dem das Verhältnis Länge/Innendurchmesser typischerweise größer als 4 ist.

12. Verfahren nach Anspruch 11, wobei eine Gegenelektrode (3) zentrisch im Inneren des Rohrs angebracht und nach Inkontaktbringen des Elektrophoresebades (1) mit der gesamten Innenfläche des Rohrs (2) oder einem Teil davon auf der Innenoberfläche eine Schicht (10) aus einem oder mehreren festen anorganischen Materialien, die mit elektrokoagulierbarem Harz ummantelt sind, elektrophoretisch aufgebracht wird, wobei die Gegenelektrode (3) ggfs. längs der Mittelachse des Rohrs (2) verschoben wird.

13. Verfahren nach Anspruch 12, wobei die Gegenelektrode (3) eine sich über die gesamte Länge des Rohrs erstreckende und beispielsweise mit isolierenden Kappen (6) in Bezug auf das Rohr (2) zentrierte leitende Stange ist und das Elektrophoresebad (1) während der Stufe der elektrischen Abscheidung im Inneren des Rohrs (2) zirkulieren gelassen wird.

14. Verfahren nach Anspruch 12, wobei die Gegenelektrode einen allein als Gegenelektrode wirksamen leitenden Teil (7) und einen isolierenden Teil (8) aufweist, vorzugsweise mit mindestens einem Zentrierstück (9) versehen ist, das mit der Gegenelektrode verbunden ist und vorteilhaft auf Höhe des Übergangs vom leitenden Teil (7) zum isolierenden Teil (8) angeordnet ist, und der leitende Teil (7) in das Elektrophoresebad eintaucht, und wobei die Gegenelektrode relativ zum Rohr (2) vom einen Ende zum anderen verschoben wird, so daß auf der gesamten Innenoberfläche des Rohrs eine elektrisch abgeschiedene Schicht erhalten wird.

15. Verfahren nach Anspruch 14, wobei der leitende Teil (7) eine kleinere Länge als der isolierende Teil (8) aufweist und die Länge Vorzugsweise das 0,5- bis 4-fache des Innendurchmessers des Rohrs (2) beträgt.

16. Verfahren nach Anspruch 14, wobei das Rohr (2) nicht geradlinig sein kann, die Gegenelektrode aus einem isolierenden, flexiblen Teil (11) und einem leitenden Teil (7) besteht, der mit dem Zentrierstück (9) verbunden ist, und die elektrische Abscheidung durch Verschieben der Gegenelektrode unter Ausübung einer Zugkraft auf den isolierenden, flexiblen Teil (8) durchgeführt wird.

17. Verfahren nach einem der Ansprüche 14 bis 16, wobei die Geschwindigkeit der relativen Verschiebung des Rohrs (2) in Bezug auf den leitenden Teil (7) mit einem elektrischen Elektrophoresesignal geregelt wird, das unter der Spannung, der Stromdichte, der Stromstärke oder der Strommenge ausgewählt wird.

18. Verfahren nach einem der Ansprüche 1 bis 17, wobei die elektrische Abscheidung gleichzeitig auf mehreren porösen leitenden Trägern vorgenommen wird.

19. Verfahren nach einem der Ansprüche 1 bis 18, wobei die elektrophoretische Abscheidung mit einem elektrischen Elektrophoresesignal, das unter der Spannung, der Stromdichte, der Stromstärke oder der Strommenge ausgewählt wird, geregelt und insbesondere dann unterbrochen wird, wenn das elektrische Signal einen vorgegebenen Sollwert erreicht.

20. Verfahren nach einem der Ansprüche 1 bis 19, wobei die Sintertemperatur im Bereich von 500 bis 2500 °C und vorzugsweise im Bereich von 800 bis 1200 °C liegt.

21. Element oder Einheit von Elementen zur Mikrofiltration, Ultrafiltration oder Umkehrosmose, die nach einem der Ansprüche 1 bis 20 erhalten sind.


## Claims

1. Process for the production of a microfiltration, ultrafiltration or reverse osmosis element, constituted by a semipermeable mineral membrane on a porous conductive support, characterized in that it comprises the following stages:
   a) an electrophoresis bath (1) is prepared by finely dispersing one or more inert solid mineral products in a liquid medium such as water or water mixed with at least partly hydrosoluble organic solvents, in the presence of an electrodepositable, hydrosoluble coating resin,
   b) after contacting said electrophoresis bath (1) with all or part of the porous conductive support (2) having a random geometry and taken as the electrode and having a metal counterelectrode (3), over the entire surface of the porous conductive support in contact with the electrophoresis bath is deposited by electrophoresis at least one layer (10) of electrodepositable resin-coated solid mineral products
   c) said porous conductive support covered with one or more solid mineral product layers coated with an electro-coagulated resin undergoes a heat treatment in order to eliminate the water, the residual organic solvents and the organic materials, followed by the sintering of the mineral powder layer until the desired pore fineness is obtained.

2. Process according to claim 1, wherein said inert solid mineral product is a mineral carbide, nitride or oxide in finely divided form, either alone or in mixed form, e.g. zirconia ($ZrO_2$), alumina ($Al_2O_3$), titanium dioxide ($TiO_2$), silica ($SiO_2$), yttrium oxide ($Y_2O_3$), mullite ($3Al_2O_3 \cdot 2SiO_2$), cordierite ($2Al_2O_3 \cdot 2MgO \cdot 5SiO_2$), aluminium titanate ($Al_2TiO_5$), magnesium spinel ($Al_2MgO_4$), zircon ($ZrSiO_4$), silicon carbide ($SiC$) or silicon nitride

$(Si_3N_4)$, SiAl O N.

3. Process according to claim 1, wherein said inert solid mineral product is in the form of a peptized gel based on Al, Ti, Zr, Si or Y hydroxide or mixtures of said hydroxides with other metals able to lead to the formation of spinel.

4. Process according to either of the claims 2 and 3, wherein said inert solid mineral product, either alone or mixed with other inert solid mineral products, is finely dispersed in a liquid medium constituted by 30 to 100% by weight water and 0 to 70% by weight of one or more at least partly hydrosoluble organic solvents, in the presence of an electrodepositable hydrosoluble resin, such as a resin cathode depositable by cataphoresis or a resin anode depositable by anaphoresis.

5. Process according to claim 4, wherein the dispersion of said mineral powder is continued, so as to obtain a mean grain size between 10 $\mu$m and 1 nm.

6. Process according to claim 5, wherein the composition of said electrophoresis bath is adjusted by the possible addition of water, at least partly hydrosoluble organic solvent and electrodepositable hydrosoluble resin to said solid mineral product finely dispersed in a liquid medium, so as to have a M/O ratio between 0.1 and 25 and a sum M+O between 5 and 45% with M being equal to the weight percentage of mineral powder in the electrophoresis bath and 0 equal to the weight percentage of the coating resin (expressed in 100% resin) in the electrophoresis bath.

7. Process according to claim 6, wherein the M/O ratio is preferably chosen between 0.5 and 10 and wherein said sum M+O is preferably chosen between 15 and 30%.

8. Process according to any one of the claims 1 to 7, wherein by electrophoresis is deposited on said porous conductive support having a random geometry, the said resin-coated, solid mineral product, which is electrodeposited under a voltage between 50 and 500 V, preferably 100 and 300 V and with a current density between 5 and 50 mA/cm² and preferably between 10 and 30 mA/cm².

9. Process according to any one of claims 1 to 8, wherein electrodeposition takes place of a new layer of solid mineral product, or of a number of successive layers, with grain sizes of varying fineness, and/or of varying chemical composition.

10. Process according to any one of the claims 1 to 9, wherein said porous conductive support of random geometry and which is optionally flexible has part of its surface out of contact with the electrophoresis bath and in which the other part has pores with a diameter between 0.1 and 50 $\mu$m.

11. Process according to any one of the claims 1 to 10, wherein said porous conductive support is a tube (2), which is longer than its diameter and in which typically the length to internal diameter ratio exceeds 4.

12. Process according to claim 11, wherein a counterelectrode (3) is centered in the interior of said tube and after contacting the electrophoresis bath (1) with all or part of the interior of tube (2), by electrophoresis is deposited on its inner surface a layer (10) of resin-coated solid mineral products, which electro-coagulate, with an optional displacement of the counter-electrode (3) along the central axis of tube (2).

13. Process according to claim 12, wherein the counterelectrode (3) is a conductive rod over the entire length of the tube and which is centered with respect to the latter, e.g. by insulating endpieces (6) and wherein the electrophoresis bath (1) can be circulated within tube (2) during the electrodeposition stage.

14. Process according to claim 12, wherein the counterelectrode has a conductive part (7) and which alone is active as the counterelectrode and an insulated part (8), which is preferably provided with at least one centering member (9) integral with the counterelectrode and advantageously positioned at the junction of the conductive part (7) and the insulated part (8) and wherein with the conductive part (7) immersed in the electrophoresis bath, it undergoes a relative displacement with respect to the tube (2) from one end to the other of the latter, so that an electrodeposited coating is obtained over its entire inner surface.

15. Process according to claim 14, wherein the length of the conductive part (7) is less than that of the insulated part (8) and the length is preferably between 0.5 and 4 times the internal diameter of tube (2).

16. Process according to claim 14, wherein tube (2) may not be rectilinear, wherein the counterelectrode is constituted by a flexible insulated part (11) and a conductive part (7) integral with the centering member (9) and wherein electrodeposition takes place by displacing the counterelectrode by exerting a tensile stress on the flexible insulated part (8).

17. Process according to any one of the claims 14 to 16, wherein the relative displacement speed of tube (2) with respect to the conductive part (7) is dependent on an electrophoresis electric signal chosen from among the voltage, current density, current intensity or current quantity.

18. Process according to any one of the claims 1 to 17, wherein electrodeposition takes place simultaneously on several porous conductive supports.

19. Process according to any one of the claims 1 to 18, wherein deposition by electrophoresis is dependent on an electrophoresis electric signal chosen from among the voltage, current density, current intensity or current quality and is in particular interrupted when the electric signal reaches a predetermined desired value.

20. Process according to any one of the claims 1 to 19, wherein the sintering temperature is between 500 and 2500°C and preferably between 800 and 1200°C.

21. Microfiltration, ultrafiltration or reverse osmosis element or group of elements obtained according to any one of the claims 1 to 20.

FIG.1

a

b

FIG 2A

FIG 2a

a

b + c

b

FIG 2B

FIG 2b

FIG.3

FIG. **4**

FIG. 5

FIG. 6

F I G. 7

FIG. 7-1

FIG. 8-1

FIG. 8-2

FIG. 8-3

FIG. 9-1

FIG. 9-2

FIG. 9-3